# EUROPEAN PATENT SPECIFICATION

(11) **EP 1 223 796 B1**
(45) Date of publication and mention of the grant of the patent: **03.03.2004**
(21) Application number: 00953121.1
(22) Date of filing: 31.07.2000
(51) Int. Cl.: A01F 7/06, A01F 12/44, A01D 41/12

(54) **ROTARY THRESHING AND SEPARATION UNIT**
DRESCH- UND ABSCHEIDEROTOR
UNITE DE BATTAGE ET DE SEPARATION ROTATIVE

(30) Priority: 29.09.1999 GB 9922978
(43) Date of publication of application: 24.07.2002
(73) Proprietor: CLAAS Selbstfahrende Erntemaschinen GmbH, 33428 Harsewinkel (DE)
(72) Inventor: VISAGIE, Andrie, 9660 Bothaville (ZA)
(86) International application number: PCT/EP2000/007371
(87) International publication number: WO 2001/022796

(56) References cited:
- WO-A-97/29628
- GB-A- 2 014 025
- US-A- 4 250 897
- US-A- 4 353 376

## Description

This patent application refers to a rotary threshing and separation unit, comprising a rotor housing with a feeding zone, a separation zone and a discharge zone, parts of the circumferential housing being closed and other parts having openings, a rotary driven threshing and separation rotor arranged in said rotor housing, beater plates fixed on said threshing and separation rotor, main sucking air flow stream generating means sucking a main air flow stream through the rotor housing, auxiliary air flow stream generating means sucking an auxiliary air flow stream through a space underneath the sieve means and baffle plates arranged in the space underneath the sieves. Such rotary threshing and separation units are used in combine harvesters.

Such a rotary threshing and separation unit is known from PCT/US 97/02432. The separation rotor does not only thresh and separate, it also is capable of cleaning harvested grain. However, for reason of simplification the rotor is called threshing and separation rotor further on. The feeding action inside of the rotor may be generated by the main air flow stream which sucks the harvested grain through the rotor housing and the separation rotor. Grain exiting the rotor housing through the openings in the sieve means is subject of an auxiliary air flow stream to separate the grain kernels from chaff, broken straw and debris which also passes the openings in the sieve means. To improve the separating function in the space between the sieve means and a trough as a grain collecting element, it is disclosed to open an auxiliary grain exit and to bar the auxiliary air flow stream by a baffle plate to urge the auxiliary air flow stream into a circuitous route. The problem is, that the position of the baffle plates is a compromise for all relevant working conditions and kinds of crop. However, with a compromise it is impossible to achieve optimal results under certain working conditions. It is disclosed in the reference that one of the baffle plates is releasably fixed, but that makes it impossible to make adjustments on the go, as it may be necessary under operation of the combine.

Accordingly, it is the subject of this invention to improve the separating function of the baffle plates.

An improvement can be achieved if at least one baffle plate is adjustably fixed to the threshing and separation unit and by variation of its lengthwise position in relation to the feeding direction of the harvested material the travel path of the auxiliary air flow stream can be varied. According to another embodiment of the invention, the height of at least one baffle plate is variably adjustable and by variation of the height of the baffle plate the travel path of the auxiliary air flow stream can be varied. With these two embodiments of the invention, it is possible to adapt more closely towards an optimal function the lengthwise and/or height position and/or the cross-sectional shape of at least one baffle plate in relation to the cross-section of the duct through which the auxiliary air flow stream is travelling, By this, it isn't necessary any more to provide a plurality of baffle plates, to select one and exchange it with the one being mounted to the machine. An adjustment is easier done than a complete replacement of an element.

Of course, it is possible to have one baffle plate adjustable in its position as well as a variable shape of it. A further improvement can be achieved if an electronic control device adjusts the settings of at least one baffle plate. The settings of the baffle plates can automatically be adjusted if there is a grain loss sensor fixed on a baffle plate which measures how many grain kernels hit the baffle plates. A remote-controlled adjustment of the settings of at least one baffle plate can be effected by actuators which are controlled by the electronic control device, and the electronic control device operates the actuators according to electronically transmitted input data which are generated by an operator. With such an arrangement the travelling path of the auxiliary air flow stream which has a remarkable influence upon the total performance of the combine can easily be influenced, and if the combine is equipped with the respective controls and actuators, such adaption can be effected on the go of the combine by remote controls.

The advantages of this invention will become apparent upon consideration of the following detailed disclosure of the invention, especially when it is taken in conjunction with the accompanying drawings wherein:
- Fig. 1: is a side elevation of the threshing and separation unit,
- Fig. 2: shows a cross-sectional view along line II-II in Fig. 1.

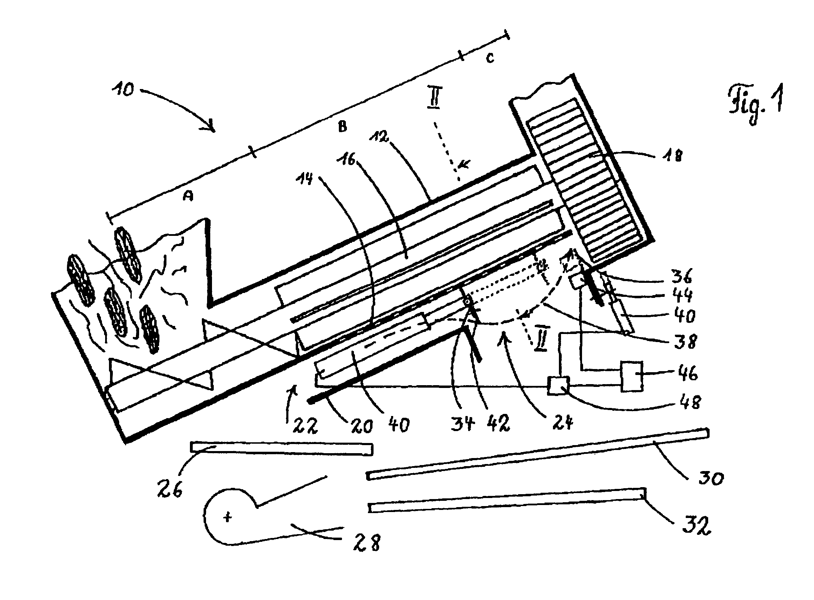

In Fig 1 there is shown a threshing and separation unit 10. It includes a rotor housing 12 with a feeding zone A, a separation zone B and a discharge zone C, sieve means 14 arranged at least in said separation zone B, a rotary driven separation rotor 16 arranged in said housing 12 , main sucking air flow stream generating means 18 generating at least a main sucking air flow stream moving at least through the separation zone B and the discharge zone C, a grain collecting element 20 arranged in some distance towards the sieve means 14. In action, crop is fed into the feeding zone A. The fractions of the different zones A, B, C along the length of a rotor housing can be adapted as required. Also the tools attached to the separation rotor 16 in the different zones A, B, C can be selected as required. By reason of simplicity, the feeding elements are not shown. In combine harvesters, for example, this is done by a feed rake arranged in a feeder housing, which receives cut crop from the cutterbar and distributes it towards the threshing elements. The harvested crop is then distributed into the separation zone B where it is threshed and/or separated. The grain kernels get separated, because they are threshed out of the harvested crop, get accellerated into an axial movement along the inner surface of the rotor housing, corresponding to the speed increase, the centrifugal forces acting upon the grain kernels are growing, and they force the grain kernels earlier or later during their travel trough the rotor housing into one of the openings the sieve means 14 comprise. They fall through the openings into the space between the sieve means 14 and the grain collecting element 20. One fraction of the separated grain kernels fall on the grain collecting element 20, from where they are transported towards the first grain exit 22, and another fraction of the separated grain falls into the second grain exit 24. The grain kernels which have passed the grain exits 22, 24 may be subject of a further cleaning process which may be effected by a conventional cleaning device as shown in Fig. 1, comprising a grain pan 26, a blower unit 28, an upper sieve 30 and a lower sieve 32, or any other appropriate cleaning device. The grain kernels are then collected, for example in a grain bin (not shown).

The auxiliary air flow stream means 18 generate an air stream, which flows through the space between the sieve means 14 and the grain collecting element 20 towards the air flow stream generating means 18, for example a blower. On its way towards the air flow stream generating means 18, the air flow stream is deviated by the baffle plates 34, 36. The baffle plate 34 forces the air flow stream downwards, and the baffle plate 36 forces the air flow stream upwards again. The travelling path of the air flow stream could substantially be looking like the path 38, shown in broken lines. In this air flow stream, the lighter fractions, like chaff, broken straw and debris, follows substantially the path of the air flow stream because their light weight makes it impossible to withstand the force of the wind. This is different with the grain kernels: because of their relatively high weight they might incorporate a higher degree of moving energy, and because of their inertia they mustn't get deviated very much if the blowing path of the air flow stream changes. More or less they keep their initial travelling path, if the incorporate a high level of moving energy. This means, that if the air flow stream deviates around baffle plate 34, the grain kernels wouldn't necessaryly do so. It depends upon, how much moving energy they have. There may be high differences between the moving energy levels of grain kernels, depending upon the kind of grain and of their speed. Maize kernels are much bigger than rapeseed kernels, and the aerodynamics of rice can be different to those of beans. The weight might be different due to a differing humidity inside of the grain kernels, and the speed level depends upon the rotational speed of the rotor and the amount of straw and leaves which might slow down the grain kernel before they drop out of the rotor housing. As a result, there are many influencing factors which affect the moving energy of the grain kernels. If they hit the baffle plate 34 with high speed, the grain kernels might crack. Under such conditions it is not desirous if the grain kernels collide with baffle plate 34. On the other hand, if the grain kernel are slow, they will fall down into grain exit 24 anyway without deflection from baffle plate 34, and then baffle plate 34 might hinder the sucking action of auxiliary air flow generating means 18. To be able to adapt the position of baffle plate 34 to the requirements of present working conditions, it can be shifted by an actuator 40. In Fig.1. actuator 40 is shown as a hydraulic cylinder, but it can also be any other driving element, or even by hand. Baffle plate 34 can be shifted towards any position between that position shown in full lines and the rearmost position shown in dotted lines. The same applies for baffle plate 36. By shifting the positions of baffle plates 34, 36 it is also possible to influence the shares how many volume of the air flow stream is sucked trough the rotor housing and how many out of the space between the sieve means 14 and the grain collecting element 20 and of the grain exit 24.

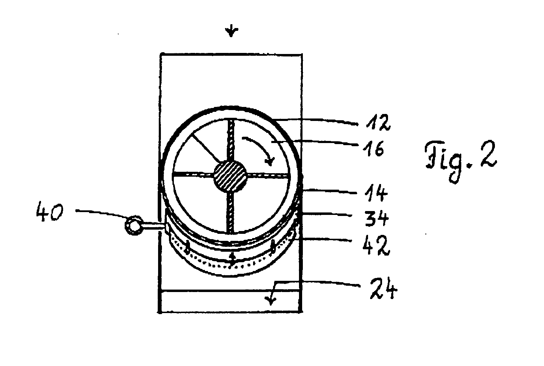

To be able to vary the influence of baffle plates 34, 36, it is also suggested that the heght or shape of the baffle plates 34, 36 can be varied. According to Fig. 2, which shows a cross sectional view along line II-II in Fig. 1 into the direction of the feeding zone A, the extension part 42 can be pulled down or pushed upwards, and it is fixed by screws and guided by slotted holes.

To achieve an automization of the adjustment, there is a grain loss sensor 44 fixed on baffle plate 36. The grain loss sensor 44 is able to detect, how many grain kernels hit the baffle plate 36. This number of hits can be taken as a measure how effective the settings of baffle plates 34, 36 works. Starting with a certain setting, the present hit level can be transmitted towards a electronic control device 46 like a computer. The computer may then decide supported by an algorithm and stored data, whether at all, and, if yes, which alteration of the settings shall be performed. A new setting value can also be effected by an operator who causes adjustments by respective inputs. The electronic control device 46 will then emit a setting signal to a valve 48 by which the settings of actuators 40 are controlled. If the changes of settings are performed, the new hit level can be detected by the grain loss sensor 44, and by the result the electronic control device 46 can decide how to proceed. For more simple systems, it is also possible to preselect a setting of the baffle plates 34, 36 for a certain crop, and the setting will be performed by the electronic control device 46, or just one of the baffle plates 34, 36 is operated by the electronic control device 46. Of course, also the extension part 42 can be integrated into a system operated by the electronic control device 46.

While the preferred structure in which the principles of the present invention have been incorporated is shown and described above it is to be understood that the invention is not to be limited to the particular details thus presented, but in fact, widely different means may be employed in the practice of the broader aspects of this invention. The scope of the appended claims is intended to encompass all obvious changes in the details, materials and arrangements of parts which will occur to one skilled in the art upon a reading of the disclosure.

## Claims

1. A rotary threshing and separation unit (10), comprising a rotor housing (12) with a feeding zone (A), a separation zone (B) and a discharge zone (C), parts of the circumferential housing being closed and other parts having openings, a rotary driven threshing and separation rotor (16) arranged in said rotor housing, beater plates fixed on said threshing and separation rotor, main sucking air flow stream generating means sucking a main air flow stream through the rotor housing, auxiliary air flow stream (18) generating means sucking an auxiliary air flow stream (18) through a space underneath the sieve means (14) and baffle plates (34, 36) arranged in the space underneath the sieves,
**characterized in,**
**that** at least one baffle plate (34, 36) is adjustably fixed to the threshing and separation unit (10) and by variation of its lengthwise position in relation to the feeding direction of the harvested material the travel path (38) of the auxiliary air flow stream (18) can be varied.

2. A rotary threshing and separation unit (10) according to claim 1 ,
**characterized in,**
**that** the height of at least one baffle plate (34, 36) is variably adjustable and by variation of the height of the baffle plate (34, 36) the travel path (38) of auxiliary air flow stream (18) can be varied.

3. A rotary threshing and separation unit (10) as claimed in one of the preceding claims,
**characterized in,**
**that** at least one baffle plate (34, 36) is variably fixed to the threshing and separation unit (10) and its position is adjustable, and the height of that baffle plate (34, 36) is variable.

4. A rotary threshing and separation unit (10) as claimed in one of the preceding claims,
**characterized in,**
**that** by an electronic control device (46) the settings of at least one baffle plate (34, 36) can be adjusted.

5. A rotary threshing and separation unit (10) as claimed in one of the preceding claims,
**characterized in,**
**that** there is a grain loss sensor (44) fixed on a baffle plate (34, 36).

6. A rotary threshing and separation unit (10) as claimed in one of the preceding claims,
**characterized in,**
**that** a remote-controlled adjustment of the settings of at least one baffle plate (34, 36) can be effected by actuators (40) which are controlled by the electronic control device (46), and the electronic control device (46) operates the actuators (40) according to electronically transmitted input data which are generated by an operator.

## Patentansprüche

1. Dresch- und Abscheiderotor (10), umfassend ein Rotorgehäuse (12) mit einer Beschickungszone (A), einer Abscheidezone (B) und einer Ausgabezone (C), wobei Teile des umgebenden Gehäuses geschlossen sind und andere Teile Öffnungen aufweisen, wobei ein drehend angetriebener Dresch- und Abscheiderotor (16) in dem Rotorgehäuse angeordnet ist, Schlagleisten an dem Dresch- und Abscheiderotor befestigt sind, ein Hauptsaugluftstromerzeugungsmittel einen Hauptluftstrom durch das Rotorgehäuse saugt, ein Hilfsluftstromerzeugungsmittel (18) einen Hilfsluftstrom (18) durch einen Raum unterhalb des Siebmittels (14) saugt, und Prallplatten (34, 36) in dem Raum unterhalb der Siebe angeordnet sind,
**dadurch gekennzeichnet, dass**
die wenigstens eine Prallplatte (34, 36) einstellbar an der Dresch- und Abscheideeinheit (10) befestigt ist und durch Verändern ihrer Längsposition in Bezug auf die Beschickungsrichtung des geernteten Materials der Bewegungspfad (38) des Hilfsluftstroms (18) geändert werden kann.

2. Dresch- und Abscheiderotor (10) nach Anspruch 1,
**dadurch gekennzeichnet, dass**
die Höhe von wenigstens einer Prallplatte (34, 36) variabel einstellbar ist und der Bewegungspfad (38) des Hilfsluftstromes (18) durch Ändern der Höhe der Prallplatte (34, 36) geändert werden kann.

3. Dresch- und Abscheiderotor (10) nach einem der vorangehenden Ansprüche,
**dadurch gekennzeichnet, dass**
die wenigstens eine Prallplatte (34, 36) variabel an der Dresch- und Abscheideeinheit (10) befestigt ist und ihre Position einstellbar ist und die Höhe dieser Prallplatte (34, 36) variabel ist.

4. Dresch- und Abscheiderotor (10) nach einem der vorangehenden Ansprüche,
**dadurch gekennzeichnet, dass**
die Einstellungen der wenigstens einen Prallplatte (34, 36) durch eine elektronische Steuervorrichtung (46) vorgenommen werden können.

5. Dresch- und Abscheiderotor (10) nach einem der vorangehenden Ansprüche,
**dadurch gekennzeichnet, dass**
ein Getreideabgangssensor (44) an einer Prallplatte (34, 36) befestigt ist.

6. Dresch- und Abscheiderotor (10) nach einem der vorangehenden Ansprüche,
**dadurch gekennzeichnet, dass**
eine ferngesteuerte Anpassung der Einstellungen wenigstens einer Prallplatte (34, 36) durch Stellglieder (40) vorgenommen werden kann, die durch die elektronische Steuervorrichtung (46) gesteuert sind, und die elektronische Steuervorrichtung (46) die Stellglieder (40) in Übereinstimmung mit elektronisch übertragenen Eingabedaten betreibt, die von einem Bediener erzeugt werden.

## Revendications

1. Unité de battage et de séparation rotative (10), comprenant un boîtier de rotor (12) avec une zone d'alimentation (A), une zone de séparation (B) et une zone de déchargement (C), certaines parties du boîtier circonférentiel étant fermées et d'autres parties comportant des ouvertures, un rotor de battage et de séparation rotatif (16) placé dans ledit boîtier de rotor, des plaques de battage fixées sur ledit rotor de battage et de séparation, un moyen de génération de flux d'air d'aspiration principal faisant passer un flux d'air principal dans le boîtier de rotor, un moyen de génération de flux d'air auxiliaire (18) faisant passer un flux d'air auxiliaire (18) dans un espace situé sous le moyen de tamisage (14) et des plaques de déviation (34, 36) disposées dans l'espace situé sous les tamis, **caractérisée en ce que** au moins une plaque de déviation (34, 36) est fixée de manière réglable sur l'unité de battage et de séparation (10) et en faisant varier sa position dans le sens de la longueur par rapport à la direction d'alimentation de la matière moissonnée, le parcours (38) du flux d'air auxiliaire (18) peut être modifié.

2. Unité de battage et de séparation rotative (10) selon la revendication 1, **caractérisée en ce que** la hauteur d'au moins une plaque de déviation (34, 36) est réglable de manière variable, et en faisant varier la hauteur de la plaque de déviation (34, 36), le trajet (38) du flux d'air auxiliaire (18) peut être modifié.

3. Unité de battage et de séparation rotative (10) selon l'une des revendications précédentes, **caractérisée en ce qu'**au moins une plaque de déviation (34, 36) est fixée de manière variable sur l'unité de battage et de séparation (10) et sa position est réglable, et la hauteur de cette plaque de déviation (34, 36) est variable.

4. Unité de battage et de séparation rotative (10) selon l'une des revendications précédentes, **caractérisée en ce que**, au moyen d'un dispositif de commande électronique (46), les réglages d'au moins une plaque de déviation (34, 36) peuvent être ajustés.

5. Unité de battage et de séparation rotative (10) selon l'une des revendications précédentes, **caractérisée en ce qu'**un capteur (44) de perte de grain est fixé sur une plaque de déviation (34, 36).

6. Unité de battage et de séparation rotative (10) selon l'une des revendications précédentes, **caractérisée en ce qu'**un ajustement télécommandé des réglages d'au moins une plaque de déviation (34, 36) peut être effectué par des actionneurs (40) qui sont commandés par le dispositif de commande électronique (46), et le dispositif de commande électronique (46) commande les actionneurs (40) selon des données d'entrée transmises par voie électronique qui sont générées par un opérateur.
